# FASCICULE DE BREVET EUROPEEN

(11) **EP 3 138 375 B1**
(45) Date de publication et mention de la délivrance du brevet: **30.01.2019**
(21) Numéro de dépôt: 16186438.4
(22) Date de dépôt: 30.08.2016
(51) Int. Cl.: A01C 15/12

(54) **DISPOSITIF DE DOSAGE POUR SYSTÈME DE DISTRIBUTION DE PARTICULES POUR MACHINE AGRICOLE, ET SYSTÈME DE DISTRIBUTION CORRESPONDANT**
DOSIERVORRICHTUNG FÜR PARTIKELVERTEILUNGSSYSTEM FÜR LANDWIRTSCHAFTLICHE MASCHINE, UND ENTSPRECHENDES VERTEILUNGSSYSTEM
METERING DEVICE FOR A PARTICLE DELIVERY SYSTEM FOR AN AGRICULTURAL MACHINE, AND CORRESPONDING DISPENSING SYSTEM

(30) Priorité: 02.09.2015 FR 1558143
(43) Date de publication de la demande: 08.03.2017
(73) Titulaire: Sulky Burel, 35220 Chateaubourg (FR)
(72) Inventeur: LOISELEUR, Frédéric, 28190 Saint-Georges-sur-Eure (FR)
(74) Mandataire: Vidon Brevets & Stratégie

(56) Documents cités:
- EP-A1- 0 383 071
- EP-A1- 1 088 475
- US-A1- 2003 098 373
- US-B1- 6 202 944

## Description

### 1. Domaine de l'invention

Le domaine de l'invention est celui de la distribution de particules pour l'agriculture, et notamment d'engrais, se présentant sous forme de granulés, de produits en vrac, de pellets ou de poudre. Plus précisément, l'invention concerne le dosage de ces particules, lors de leur distribution par une machine agricole.

### 2. Art antérieur et ses inconvénients

Il existe à ce jour deux principaux systèmes de distribution de particules pour machines agricoles, à savoir les épandeurs portés qui sont fixés sur le châssis du tracteur et portés par ce dernier, et les épandeurs traînés, ou tractés, qui comprennent un châssis et un ensemble de roues, et qui sont traînés par le tracteur. De tels épandeurs traînés ou portés comprennent également un réservoir, ainsi qu'un module d'épandage pour distribuer les particules à épandre. Les épandeurs traînés présentent généralement des réservoirs, ou trémies, de plus grande capacité que les épandeurs portés.

La présente invention s'applique aussi bien aux systèmes de distribution de particules de type épandeurs portés que de types épandeurs traînés ou tractés. Un exemple d'un tel épandeur est connu du document US 2003/098373 A1.

Dans de tels épandeurs, le module d'épandage reçoit généralement les particules par l'intermédiaire d'un convoyeur, formé par une bande transporteuse, circulant autour de cylindres de renvoi, ou rouleaux d'entraînement, dans la partie inférieure du réservoir d'alimentation. Le plus souvent, le convoyeur s'étend, dans le sens d'avancement de la machine agricole, de la partie avant vers la partie arrière du réservoir, et permet d'acheminer les particules du réservoir vers un orifice de sortie disposé sur la face arrière de ce dernier. Plus généralement, en fonction de la position de l'orifice de sortie sur le réservoir, le convoyeur permet d'acheminer les particules du réservoir vers cet orifice de sortie. Les particules tombent ensuite du convoyeur vers le module d'épandage situé en aval du réservoir.

Il existe en outre différents types de modules d'épandage susceptibles d'être fixés à l'arrière de tels épandeurs, en fonction de la nature du produit à épandre. Ces modules d'épandage sont fixés, de manière amovible, en dessous de l'orifice de sortie du réservoir.

Ainsi, pour les pulvérulents secs de type poudre, on fixe par exemple à l'arrière de l'épandeur une rampe à entraînement mécanique avec vis à spire s'étendant transversalement par rapport au sens d'avancement de la machine ; pour les produits en vrac et les pellets organiques, on équipe l'épandeur de disques d'épandage ultra-résistants aptes à distribuer de gros débits d'environ 3 tonnes/ha ; enfin, pour les engrais granulés, le module d'épandage comprend généralement deux disques d'épandage rotatifs de précision, portant des pales de projection, qui permettent de projeter les particules par effet centrifuge, sous la forme d'une nappe d'épandage s'étendant à l'arrière de la machine agricole. Il existe également, notamment pour les engrais granulés, des modules d'épandage par rampe à transport pneumatique.

A des fins tant économiques qu'environnementales, il existe une demande de plus en plus forte pour réaliser une agriculture de précision, permettant un contrôle fin de la quantité de particules à épandre sur une parcelle. Cette exigence de précision porte principalement sur les produits de type engrais granulés, distribués au moyen de disques rotatifs centrifuges de précision.

Plusieurs systèmes de dosage de la quantité de particules à épandre ont été proposés à ce jour.

Une première approche consiste à moduler la dose de particules à épandre, en agissant sur la vitesse de déplacement du tapis du convoyeur. L'orifice de sortie du réservoir d'alimentation est alors de section constante. L'augmentation de la vitesse de déplacement du convoyeur entraîne une augmentation de la dose de particules épandues. Une telle approche impose des contraintes fortes sur le système d'entraînement du convoyeur, qui s'avère donc complexe et coûteux, en particulier pour régler rapport de vitesse nécessaire pour moduler la dose à distribuer.

Une seconde approche consiste à moduler la dose de particules à épandre en agissant sur la section de l'orifice de sortie du réservoir. Le convoyeur se déplace alors à une vitesse proportionnelle à la vitesse d'avancement de la machine agricole, et le réglage de la dose se fait en ouvrant plus ou moins l'orifice de sortie, au moyen d'une trappe mobile. Une telle solution est par exemple décrite dans le document de brevet FR 1 419 150 dans lequel la quantité de matière passant du réservoir à la goulotte d'alimentation du disque de distribution est déterminée par la hauteur de l'ouverture d'une trappe de sortie du réservoir. Le document de brevet EP 0 170 605 décrit également une solution proche, dans laquelle, en outre, la goulotte est choisie dans un jeu de goulottes dont chaque bec déversoir a une forme différente et bien particulière pour définir la forme de la zone de réception du produit, ainsi que son emplacement, sur le disque.

Dans ce type de système de modulation du dosage, la ou les trappes d'obturation de l'orifice de sortie du réservoir sont le plus souvent verticales, ou suivent éventuellement la forme généralement tronconique de la trémie ou du réservoir, et forment alors généralement avec le plan du convoyeur un angle obtus dans le sens trigonométrique (les trappes rentrant alors vers l'intérieur du réservoir). En d'autres termes, vu d'un observateur situé dans le réservoir, la trappe d'obturation et le plan du convoyeur forment un angle obtus.

Lorsque la trappe (ou les trappes) est en position fermée, son extrémité inférieure se trouve généralement à une assez grande distance en amont du point à partir duquel les particules tombent du tapis du convoyeur vers le module d'épandage, typiquement de l'ordre de 400 mm. Considérant une vitesse de déplacement de la machine agricole d'environ 10 km/h, il en résulte que la machine agricole peut avoir parcouru jusqu'à 15 m environ dans le champ, entre le moment où l'on ferme totalement la trappe mobile pour cesser l'alimentation du module d'épandage en particules, et le moment où le module d'épandage cesse effectivement de distribuer toutes les particules qui étaient déjà présentes sur le convoyeur en aval de l'orifice de sortie au moment de la fermeture. Le temps et la distance de réactivité sont donc beaucoup trop longs, avec ce type de système, pour permettre un bon dosage de l'engrais dans toutes les circonstances.

Il existe donc un besoin d'une technique de dosage des particules pour systèmes de distribution pour machine agricole qui ne présente pas ces différents inconvénients de l'art antérieur.

Notamment, il existe un besoin d'une telle technique qui permette de réaliser un épandage de précision avec un contrôle précis de la dose à épandre. Plus précisément, il existe un besoin d'une telle technique qui permette de répondre aux exigences de l'agriculture de précision, en offrant une réactivité accrue de la modification de la dose à épandre par rapport aux systèmes antérieurs. Il existe également un besoin d'une telle technique qui soit également adaptée aux gros débits de chantiers.

Il existe également un besoin d'une telle technique qui soit simple et peu coûteuse.

En outre, une telle problématique de précision de la dose à épandre se pose tout particulièrement pour l'épandage d'engrais en granulés, mais s'avère moins cruciale pour les pulvérulents secs de type poudre et les produits en vrac. Or, les épandeurs existants sont polyvalents en ce qu'on fixe en leur extrémité arrière de façon amovible un module d'épandage adapté au type de produit à épandre. Il existe donc aussi un besoin d'une telle technique qui s'applique à tous ces épandeurs, et qui permette de conserver la modularité de ces épandeurs, et d'assurer une adaptation simple et rapide en fonction du module d'épandage choisi.

### 3. Exposé de l'invention

L'invention répond à ce besoin en proposant un dispositif de dosage pour système de distribution de particules pour machine agricole avec les caractéristiques de la revendication 1. Ce dispositif comprend un réservoir présentant dans une partie inférieure au moins un convoyeur apte à transporter les particules du réservoir vers au moins un orifice de sortie du réservoir. Le dispositif de dosage comprend au moins une trappe mobile entre une position fermée dans laquelle elle est apte à obturer l'orifice de sortie, et une position ouverte dans laquelle elle est apte à dégager l'orifice de sortie. La ou les trappe(s) sont inclinées par rapport à la verticale, de façon que l'angle formé entre la ou les trappes et un plan du ou des convoyeur(s) dans le sens trigonométrique, appelé angle d'inclinaison, soit un angle aigu.

Selon un mode de réalisation de l'invention, en position fermée, une extrémité inférieure de la ou des trappe(s) se situe sensiblement à la verticale d'un axe de rotation d'un rouleau d'entraînement du convoyeur. En outre, un tel dispositif comprend, entre l'orifice de sortie et la ou les trappe(s) mobile(s), un obturateur, de façon à former, entre le convoyeur et l'obturateur, un tunnel d'acheminement des particules.

Ainsi, l'invention repose sur une approche tout à fait nouvelle et inventive du dosage de particules pour les systèmes d'épandage agricoles. En effet, un tel dispositif de dosage comprend une ou plusieurs trappes mobiles, qui, en position fermée, se situe(nt) à l'aplomb du point où les particules quittent le tapis. Ceci permet une alimentation contrôlée du module d'épandage sans délai de réaction, ou avec un délai de réaction minimal. En effet, la position de la trappe permet d'être au plus proche de la chute du produit en sortie du convoyeur vers le dispositif d'épandage. La valeur du débit réglée en amont est donc contrôlée instantanément au niveau de la chute du produit à épandre (pas de délai entre le réglage par les trappes et la chute). On améliore ainsi la précision instantanée du dosage par rapport aux solutions de l'art antérieur.

Par ailleurs, la ou les trappes sont inclinées par rapport à la verticale de façon à former un angle aigu avec le plan du ou des convoyeur(s) : leur actionnement est facilité du fait que les trappes ne « rentrent » pas dans les particules quand on les fait descendre pour obturer l'orifice de sortie.

En outre, grâce à la présence d'un obturateur, par création d'un tel effet tunnel, on réduit les efforts sur les parois, et notamment les pressions sur les trappes. Ceci a pour avantage de réduire les fuites de particules, et facilite le dimensionnement des vérins d'actionnement des trappes. Un tel obturateur permet avantageusement d'éviter tous risques de coulée continue des produits élaborés de type granulés, pulvérulents secs ou pellets.

Selon un mode de réalisation, un tel obturateur est mobile entre au moins une position dite haute et au moins une position dite basse.

Ainsi, en position basse, l'obturateur permet de créer un effet tunnel, qui est avantageux pour le dosage précis des produits élaborés et l'épandage de granulés par tronçonnement de la largeur d'épandage. En revanche, un tel obturateur peut s'avérer gênant pour l'extraction des produits grossiers de type calcaire humides broyés ou produits compostés. En effet, avec de tels produits, dont le taux d'humidité est relativement élevé, il existe un risque de blocage ou de bourrage de tout ou partie du produit engagé dans le tunnel créé par l'obturateur. Pour ce type de produits, on prévoit donc de pouvoir positionner l'obturateur dans une position haute, dans laquelle il est escamoté, et l'effet tunnel est supprimé. Dans sa position haute, l'obturateur permet donc une configuration du dispositif de dosage « sans effet tunnel », tout en augmentant la hauteur d'ouverture des trappes pour garantir encore mieux l'extraction et le dosage précis des produits grossiers.

La mise en oeuvre d'un obturateur mobile permet de réaliser un dispositif de dosage polyvalent, qui est simultanément adapté à un dosage maîtrisé de produits élaborés pour un épandage par tronçons (obturateur en position basse, création d'un effet tunnel), et à l'extraction et l'épandage de produits grossiers (obturateur escamoté, ou en position haute).

Selon un mode de réalisation, un tel obturateur comprend un volet mobile en rotation entre ladite position haute et la dite position basse. Un tel volet escamotable à deux positions est donc articulé et pivote autour d'un axe de rotation pour passer de la configuration basse à la configuration haute.

Selon un mode de réalisation, un tel obturateur est apte à coulisser de ladite au moins une position haute à ladite au moins une position basse. Dans ce cas, il coulisse de préférence dans une position suffisamment haute par rapport à la hauteur d'ouverture des trappes pour supprimer l'effet tunnel. En outre, l'obturateur peut alors prendre plusieurs positions intermédiaires entre la position haute et la position basse, qui permettent de régler la hauteur du tunnel d'acheminement en fonction de la nature du produit à épandre.

Le déplacement d'un tel obturateur (coulissant ou mobile en rotation) peut être commandé manuellement ou par vérin.

Selon un mode de réalisation, un tel obturateur présente une portion inférieure sensiblement parallèle au plan du convoyeur. En variante, cette portion inférieure peut être plus ou moins inclinée par rapport au plan du convoyeur. Notamment, pour un obturateur mobile en rotation, on pourra régler l'angle formé entre le plan du convoyeur et la portion inférieure de l'obturateur en fonction de la nature du produit à épandre.

Selon un mode de réalisation, en position fermée, une extrémité inférieure desdites trappes se situe sensiblement à la verticale mais légèrement en amont, dans le sens d'avancement du convoyeur, dudit axe de rotation. Par exemple, en position fermée, ladite extrémité inférieure se situe entre 0 et 100 mm en amont dudit axe de rotation.

Selon un mode de réalisation, ledit angle d'inclinaison est sensiblement égal à un angle de talus desdites particules à distribuer, par exemple voisin de l'angle de talus moyen des engrais (qui est généralement compris entre 35° et 55°).

On rappelle que l'angle de talus est un angle de pente caractéristique de certains matériaux. Lorsqu'un matériau granulaire ou pulvérulent se dépose par gravité sur une surface, il tend à se former, lorsque suffisamment de grains sont déposés, un tas de forme conique. L'angle de pente du cône par rapport à la surface, également appelé angle de talus, est, dans une large mesure, une caractéristique de la nature des particules, mais également de leur géométrie, de leurs dimensions et de l'homogénéité de leurs tailles dans l'ensemble du tas.

Un tel angle de talus est, pour les particules à épandre par un système d'épandage agricole, généralement compris entre 30° et 40°.

On peut prévoir un angle d'inclinaison des trappes mobiles correspondant à l'angle de talus moyen des particules à épandre par le système de distribution.

Comme l'angle d'inclinaison de la trappe suit sensiblement l'angle de talus des particules, la réactivité entre une modification de la position de l'ouverture de la trappe (ou des trappes) et la chute des particules vers le module d'épandage est accrue. On obtient ainsi, selon le dispositif de dosage de l'invention, une très bonne précision et une grande réactivité.

De plus, les mouvements de montée/descente des trappes se passent sans effort, grâce à l'angle de talus qui réduit les frictions entre trappes et particules. Il est ainsi possible de prévoir, pour l'actionnement des trappes, des vérins de petite taille et faible puissance, plus réactifs, ce qui est économiquement avantageux.

Selon un mode de réalisation, le système de distribution de particules comprenant également un module d'épandage des particules comprenant au moins deux disques d'épandage, ledit dispositif de dosage comprend au moins deux trappes mobiles indépendantes respectivement disposées en regard de chacun desdits au moins deux disques d'épandage.

Ainsi, chaque trappe mobile alimente l'un des deux disques, par l'intermédiaire par exemple d'une goulotte reliant l'extrémité du convoyeur et le disque correspondant. Il est ainsi possible de n'ouvrir que l'une des deux trappes mobiles indépendantes pour effectuer un épandage sur une demie largeur (seulement par le disque droit ou seulement par le disque gauche). Il est également possible de réaliser une gestion de la largeur de la nappe d'épandage, pour permettre un épandage dans les pointes de champs.

En outre, le dosage du produit s'effectuant en modifiant le niveau d'ouverture indépendant de chaque trappe plutôt qu'en faisant varier la vitesse du tapis, une telle solution permet de contrôler le dosage du produit tout en n'utilisant qu'un seul convoyeur avec un rapport de vitesse constant, qui pourra donc être entraîné mécaniquement de manière simple et peu coûteuse.

Selon un mode de réalisation, un tel dispositif comprend des moyens de réglage d'une hauteur d'ouverture de chacune desdites trappes mobiles indépendantes tenant compte d'une position d'un point d'alimentation de chacun desdits disques d'épandage.

Ainsi, le système de distribution de particules comprend des moyens de calcul de la position du point d'alimentation en particules de chacun des deux disques et de la position d'ouverture de chacune des trappes. Dès qu'on modifie la position du point d'alimentation (par exemple par déplacement de la goulotte d'alimentation, entraînant réglage du point de chute des particules sur le disque), on modifie conjointement la hauteur d'ouverture de chacune des trappes, pour obtenir la meilleure précision d'épandage.

Selon un mode de réalisation, un tel dispositif de dosage comprend des moyens de fixation amovible audit système de distribution de particules.

On obtient ainsi un système de distribution de particules parfaitement modulaire, dans lequel on peut ou non installer le dispositif de dosage en amont du module d'épandage, en fonction de la nature de ce dernier et du type de particules à épandre. Ainsi, avec un même système de distribution, on peut réaliser un épandage de précision de particules d'engrais granulés, en disposant, en aval du réservoir, un dispositif de dosage selon un mode de réalisation de l'invention, situé en amont d'un module d'épandage à deux disques centrifuges de précision. En démontant simplement et rapidement le dispositif de dosage, et en remplaçant le module d'épandage à deux disques centrifuges par une rampe à vis sans fin, le système de distribution peut ensuite permettre l'épandage de pulvérulents secs. L'installation ou le retrait sont rapides et aisés.

Ainsi, l'épandeur reste polyvalent. En outre, le caractère amovible et simple d'utilisation d'un tel dispositif de dosage permet d'équiper les machines du parc déjà existant, ce qui est économiquement avantageux pour leurs utilisateurs.

Selon un mode de réalisation, un tel dispositif de dosage comprend également des moyens de réduction d'une largeur dudit orifice de sortie. De tels moyens de réduction de la largeur de l'orifice de sortie peuvent prendre la forme d'un nombre de trappes mobiles indépendantes supérieur à deux (par exemple deux ou trois trappes pour chacun des côtés droite/gauche). Plus généralement, de tels moyens de réduction de la largeur peuvent être réalisés en jouant sur le nombre et/ou la largeur et/ou la forme des trappes mobiles indépendantes.

L'invention concerne également un système de distribution de particules pour machine agricole, comprenant un réservoir présentant dans sa partie inférieure au moins un convoyeur apte à transporter les particules du réservoir vers au moins un orifice de sortie du réservoir, et qui comprend des moyens de fixation amovible d'un dispositif de dosage tel que décrit précédemment.

Un tel système de distribution est modulaire, et donc polyvalent, et peut ou non être équipé d'un tel dispositif de dosage, en fonction du type de module d'épandage (rampe à vis sans fin, disques aciers robustes ou disques de précision) qu'il embarque.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la **figure 1** illustre une vue de côté d'un système de distribution de particules pour machine agricole comprenant un dispositif de dosage selon un mode de réalisation de l'invention;
- la **figure 2** présente une vue en perspective du dispositif de dosage de la **figure 1** fixé à l'arrière d'un système de distribution de particules;
- la **figure** 3 illustre un schéma de principe d'un système de distribution de particules selon la **figure 1****,** dans lequel un module d'épandage de précision est fixé en aval du dispositif de dosage dans le sens d'avancement de la machine agricole ;
- la **figure 4** illustre une variante de réalisation du système de la **figure 1****,** dans laquelle l'obturateur est escamotable entre une position basse et une position haute.

### 5. Description détaillée de modes de réalisation de l'invention

Le principe général de l'invention repose, dans un dispositif de dosage pour système de distribution de particules, sur l'utilisation d'au moins une trappe mobile inclinée par rapport au plan du convoyeur de façon à former un angle aigu avec ce dernier, et située, en position fermée, sensiblement à l'aplomb du point où les particules quittent le convoyeur. Un obturateur, disposé entre l'orifice de sortie du réservoir et la ou les trappes mobiles, permet de créer un tunnel d'acheminement des particules.

On peut ainsi réaliser un épandage de précision, à partir d'un épandeur classique que l'on équipe d'un tel dispositif de dosage.

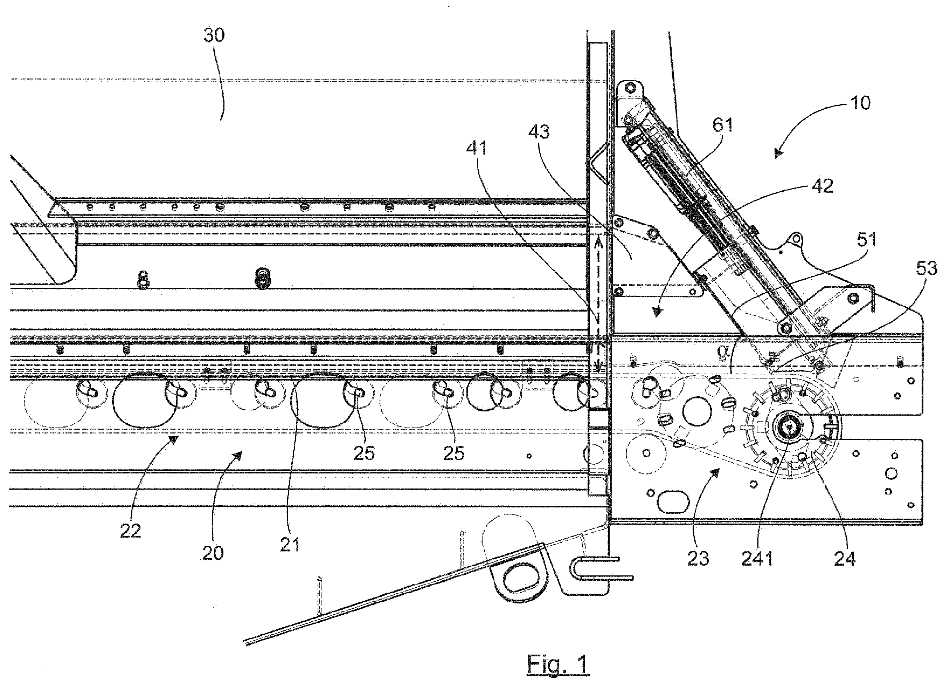

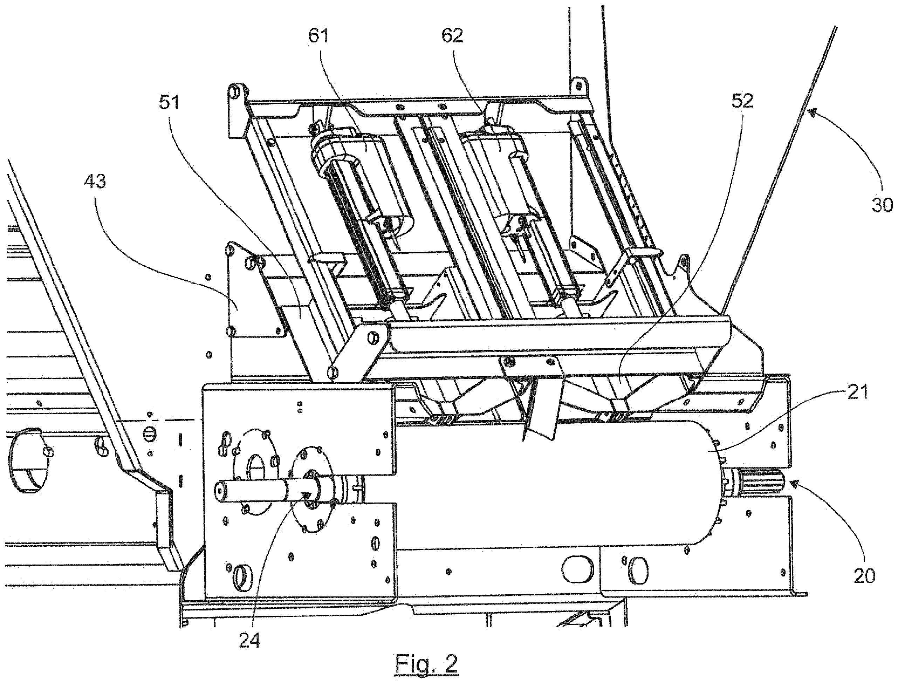

On présente désormais, en relation avec les **figures 1** **et** **2****,** un schéma de principe d'un système de distribution de particules pour machine agricole comprenant un dispositif de dosage 10 alimenté en particules de produit à épandre par l'intermédiaire d'un convoyeur 20 situé en dessous d'un réservoir, ou trémie 30. Un tel système de distribution de particules peut être traîné ou porté par la machine agricole. En outre, il peut s'agir d'un distributeur de produit en vrac, granulés, poudre, bouchons, ou vrac humide.

Le fond du réservoir 30 comporte une ouverture longitudinale sous laquelle est disposé le convoyeur 20. Ce dernier comprend une bande transporteuse 21, ou tapis roulant, qui est mise en mouvement par un cylindre de renvoi arrière 24, mobile en rotation autour d'un axe 241, ainsi que des rouleaux d'entraînement 25 disposés le long du tapis 21. Le convoyeur 20 comporte une partie arrière 23 correspondant à la partie du convoyeur 20 se trouvant sous le dispositif de dosage 10, ainsi qu'une partie avant 22 correspondant à la partie du convoyeur 20 située sous le réservoir 30.

Quand la machine agricole avance, le produit est transporté à l'extérieur du réservoir 30 par la bande transporteuse 21 vers un orifice de sortie 41, dont la hauteur est supérieure ou égale à 300 mm et dont la largeur correspond sensiblement à celle du tapis 21. Un tel orifice de sortie 41 peut être obturé par une trappe verticale (non représentée sur la **figure 1**), lorsque le système de distribution de particules n'est pas équipé du dispositif de dosage de l'invention (par exemple, lorsque le système de distribution comprend, an aval du réservoir 30, une rampe à vis sans fin pour l'épandage de pulvérulents secs, qui ne nécessite pas de réaliser un épandage de précision).

Lorsque le système de distribution de particules est utilisé pour un épandage de précision d'engrais granulés, on retire la trappe verticale d'obturation de l'orifice de sortie 41, et on fixe, de manière amovible, à l'arrière du réservoir 30, le dispositif de dosage 10 illustré sur les **figures 1** **et** **2****.** Un tel dispositif de dosage 10 se fixe simplement, sous forme d'un bloc unique à fixation rapide sur le réservoir 30. Par exemple, le dispositif de dosage 10 présente un tube transversal (non représenté), qui s'engage dans des mâchoires disposées sur des supports solidaires du châssis de l'épandeur. Il suffit alors, pour fixer le dispositif de dosage 10, de goupiller les mâchoires derrière le tube transversal, puis de relever jusqu'à ce qu'il soit correctement positionné par rapport au convoyeur. Inversement, pour démonter le dispositif de dosage, il suffit alors de dégoupiller les mâchoires et de désengager le tube transversal de ces dernières.

Un tel dispositif de dosage 10 comprend deux trappes inclinées 51, 52, disposées respectivement sur le côté gauche (associée au disque gauche du module d'épandage non représenté sur les **figures 1** **et** **2**) et sur le côté droit (associée au disque droit du module d'épandage non représenté sur les **figures 1** **et** **2**) du tapis 21, dont la largeur est d'environ 80cm.

Ainsi, le choix du réglage du débit de sortie du système de distribution des figures 1 et 2 se fait en réglant la section de sortie du réservoir 30, par réglage du niveau d'ouverture de chacune des deux trappes 51, 52. Ce choix permet une solution d'entraînement mécanique du convoyeur 20 simple et peu coûteuse, qui est souvent associé à la roue porteuse de la machine pour rendre la rotation du convoyeur proportionnelle à la vitesse d'avancement de la machine.

L'angle d'inclinaison des trappes 51, 52 par rapport au plan du tapis 21 du convoyeur 20 est un angle aigu, de façon à former un entonnoir dans le sens d'écoulement du produit. L'angle d'inclinaison des trappes 51, 52 est par ailleurs sensiblement égal à l'angle de talus du produit à épandre, qui est généralement compris entre 30° et 40°, le plus souvent proche de 35°,de façon à éviter un écoulement par gravité des particules au travers de l'ouverture des trappes 51, 52 lorsque le tapis 21 est immobile. En effet, lorsque le tapis 21 est à l'arrêt, et que les trappes 51, 52 sont totalement ouvertes (position la plus haute), les particules restent immobiles, car l'angle du tas qu'elles forment est égal à leur angle de talus.

Le tableau ci-dessous (Source : Yves SCHENKEL & Olivier MISERQUE - CENTRE DE RECHERCHES AGRONOMIQUES DE GEMBLOUX. DEPARTEMENT GENIE RURAL - Chaussée de Namur 146. B-5030 GEMBLOUX) donne les valeurs des angles de talus (septième colonne du tableau « Angle (°) ») des principaux types d'engrais (première colonne du tableau « Type »).

| **Type** | **Formule** | **d₁₆** mm | **d₅₀** mm | **d₈₄** mm | **GSI** | **Angle (°)** | **Fluidité kg/min** | **MV ST kg/m³** | **MV AT kg/m³** |
|---|---|---|---|---|---|---|---|---|---|
| PK | 0-15-30 | 2,6 | 3,2 | 4,0 | 21,98 | 35,2 | 5,2 | 1096,4 | 1152,7 |
| PK | 0-12-7 | 2,8 | 3,5 | 4,1 | 18,57 | 34,8 | 5,7 | 1229,0 | 1286,0 |
| K | 0-0-60 | 2,1 | 3,1 | 4,1 | 32,48 | 38,7 | 5,4 | 1076,5 | 1174,7 |
| Dolomie | 0-0-0 | 2,8 | 3,3 | 4,1 | 19,49 | 34,8 | 6,5 | 1262,2 | 1336,2 |
| NPK | 14-7-21 | 2,9 | 3,5 | 4,1 | 16,38 | 33,1 | 5,3 | 1042,3 | 1098,0 |
| NP | 12-54-0 | 2,6 | 2,9 | 3,3 | 13,11 | 33,2 | 5,2 | 977,4 | 1029,8 |
| N | 20-0-0 | 2,9 | 3,4 | 4,0 | 15,53 | 31,2 | 5,6 | 1099,0 | 1157,5 |
| PK | 0-12-18 | 2,6 | 3,0 | 3,6 | 17,23 | 34,4 | 5,9 | 1126,8 | 1181,6 |
| N | 26-0-0 | 2,6 | 3,1 | 4,0 | 21,32 | 35,8 | 4,4 | 877,8 | 946,6 |
| K | 0-0-11 | 1,6 | 2,6 | 4,0 | 46,44 | 37,3 | 5,9 | 1182,5 | 1266,4 |
| Kiésérite | 0-0-0 | 2,2 | 2,9 | 3,7 | 25,52 | 34,9 | 7,3 | 1374,8 | 1446,9 |
| N | 27-0-0 | 2,5 | 3,3 | 3,9 | 20,78 | 30,7 | 5,6 | 1064,0 | 1116,5 |
| PK | 0-14-18 | 3,4 | 4,3 | | | 33,6 | 6,0 | 1334,8 | 1394,5 |
| NP | 18-46-0 | 2,7 | 3,2 | 3,8 | 17,83 | 35,9 | 4,2 | 907,1 | 961,6 |
| P | 0-26-0 | 2,6 | 3,1 | 3,8 | 18,56 | 35,3 | 5,6 | 1146,2 | 1219,3 |
| NK | 16-0-31 | 2,6 | 3,0 | 3,6 | 17,77 | 33,7 | 5,3 | 1018,4 | 1076,7 |
| NPK | 5-14-28 | 2,9 | 3,4 | 3,9 | 15,86 | 33,2 | 5,6 | 1134,5 | 1195,1 |

On peut prévoir un unique dispositif de dosage 10 à fixer à l'arrière du système de distribution de particules, dans lequel l'angle d'inclinaison des trappes 51, 52, est égal à l'angle de talus moyen des particules à épandre par un tel système de distribution. On peut également prévoir plusieurs dispositifs de dosage 10, présentant des inclinaisons de trappes différentes, que l'on choisit en fonction des particules à épandre, pour que l'angle d'inclinaison des trappes 51, 52 soit le plus proche possible de l'angle de talus des particules à épandre.

L'extrémité inférieure 53 des trappes 51, 52, positionnée affleurante au tapis 21, est située légèrement en amont de l'axe vertical passant par l'axe de rotation horizontal 241 du cylindre de renvoi arrière 24. En d'autres termes, l'extrémité inférieure 53 des trappes, en position fermée, est située légèrement en amont du point à partir duquel les particules quittent le convoyeur 20 vers le module d'épandage (non représenté sur la **figure 1**)**.** Par exemple, cette extrémité 53 est située entre 0 et 100 mm en amont de l'axe horizontal 241 dans le sens d'avancement de la machine agricole.

Ainsi, on augmente la réactivité et la précision du dispositif de dosage par rapport aux solutions de l'art antérieur. En effet, dans un système de distribution de l'art antérieur, la ou les trappes verticales d'obturation de l'orifice de sortie 41 sont classiquement situées environ 400 mm en amont du point où les particules quittent le convoyeur 20. En conséquence, lors d'une modification de la dose voulue (i.e. lorsqu'on modifie la position d'ouverture de la trappe), il est nécessaire d'écouler toute la dose de produit présente le long de ces 400mm de tapis 21 et déjà extraite en aval de la trappe avant la modification, avant de constater une modification effective de distribution de particules. Pour une vitesse moyenne d'épandage de 10 km/h, cela représente un parcours au champ de 15 m, entre la commande de modification d'épandage et la modification réelle de la distribution de particules dans le champ. Avec le dispositif de dosage 10 des **figures 1 à 4****,** l'arrêt de l'épandage se produit en 0,4 s, soit 1 mètre parcouru au champ.

L'ouverture et la fermeture des trappes 51, 52 sont actionnées par des vérins électriques 61, 62 indépendants, qui permettent de contrôler indépendamment le degré d'ouverture ou de fermeture de chacune des deux trappes. Les guides de trappes sont extériorisés par rapport aux trappes pour limiter leur risque d'encrassement, faciliter l'entretien et également apporter une surface de guidage plus importante.

Le dispositif de dosage 10 comprend en outre un obturateur 43, situé en amont des trappes 51, 52 dans le sens d'avancement de la machine agricole. Un tel obturateur permet de réduire la hauteur maximale de l'ouverture 41, mais aussi de créer un effet tunnel pour éviter la coulée continue du produit.

En effet, l'espace compris entre la partie arrière 23 du tapis 21 et l'obturateur 43 forme un tunnel 42, d'une hauteur d'environ 140 mm et dont la largeur correspond à celle du tapis 21. Ce tunnel 42 prolonge l'orifice de sortie 41 sur environ 400 mm.

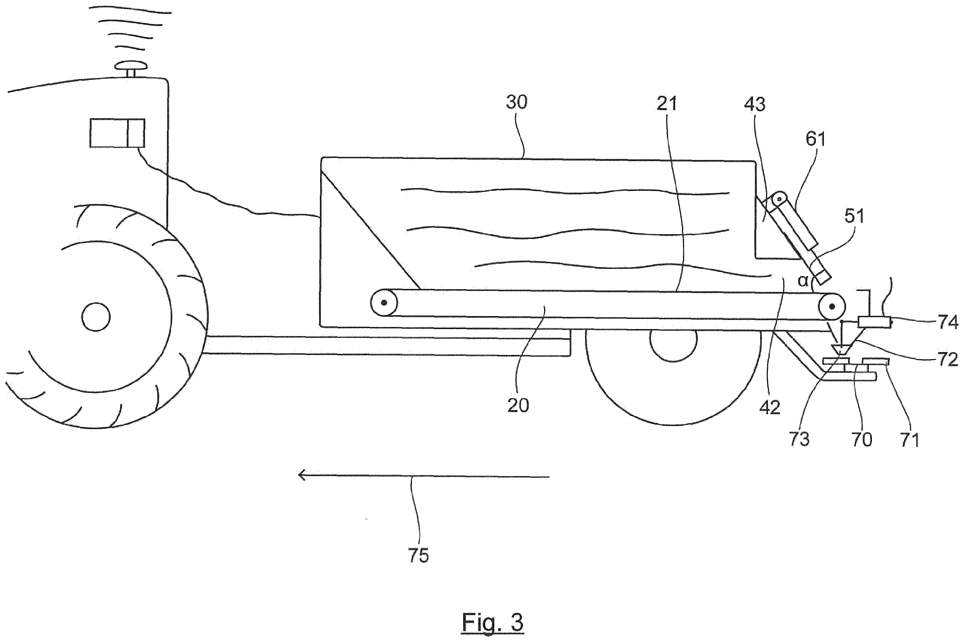

Le débit de particules à la sortie du convoyeur 20, soit au voisinage du cylindre de renvoi arrière 24, est réglé en maintenant constante la vitesse du tapis 21 et en ajustant le degré d'ouverture des trappes 51, 52 à l'aide des vérins électriques 61, 62 commandés automatiquement par une boucle d'asservissement tenant compte du débit de sortie des particules. La course maximale des vérins 61, 62 est d'environ 200 mm. En sortie du convoyeur 20, les particules tombent hors du tapis 21 sous l'effet de la gravité et arrivent au module d'épandage en passant par exemple par une goulotte (voir **figure 3**).

L'utilisation de trappes inclinées 51, 52 selon l'angle de talus permet de minimiser les interactions entre les trappes 51, 52 et le tas de particules à épandre puisqu'ils sont orientés sensiblement selon le même angle d'inclinaison, à savoir l'angle de talus des particules. Cela permet d'éviter d'une part, que le produit s'écoule par gravité lors de la fermeture des trappes 51, 52 au travers de l'espace non obturé et, d'autre part, que le poids des particules repose de façon excessive sur les trappes 51, 52 et génère des forces de friction importantes lors de leur ouverture ou de leur fermeture. Ainsi, les efforts à fournir par les vérins pour l'actionnement en ouverture et en fermeture des trappes 51, 52 sont réduits, ce qui permet l'utilisation de vérins électriques de petite puissance et de petite taille, réactifs, et donc peu coûteux.

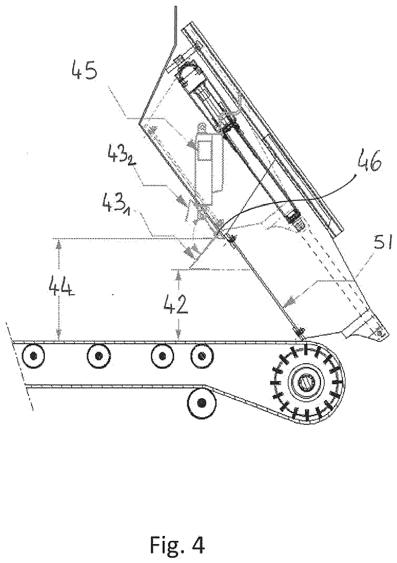

La **figure 4** présente une variante de réalisation du système de la **figure 1****,** dans laquelle l'obturateur 43 est mobile entre au moins une position basse, dans laquelle il facilite l'épandage de précision des produits élaborés, par création d'un tunnel d'acheminement des particules, et au moins une position haute, ou escamotée, dans laquelle il n'empêche pas l'extraction des produits grossiers.

Dans l'exemple de la **figure 4****,** l'obturateur se présente sous la forme d'un volet dont la section ressemble sensiblement à un L incliné. En position basse 43₁, un tel volet forme un tunnel 42 de passage des particules, avantageux pour l'épandage des produits élaborés. Un tel volet est mobile en rotation autour d'un axe 46, comme symbolisé par les flèches en arc de cercle, pour passer de la position basse 43₁ à la position haute 43₂. Dans cette position haute 43₂, l'obturateur libère un passage intégral 44 pour les produits grossiers, afin de faciliter leur extraction.

Le déplacement de l'obturateur 43 de la position basse 43₁ à la position haute 43₂ s'effectue au moyen d'une commande 45, qui peut être manuelle ou par vérin.

On notera qu'un tel obturateur peut prendre des positions intermédiaires, non illustrées sur la **figure 4****,** entre la position basse 43₁ et la position haute 43₂. Dans ce cas, la portion inférieure du volet forme avec le plan du convoyeur un angle aigu plus ou moins marqué, que l'on peut adapter en fonction de la nature du produit à épandre, pour exercer sur ce dernier une pression adaptée à sa bonne extraction du réservoir.

Dans une variante de réalisation non représentée sur la figure 4, l'obturateur 43 peut également coulisser de la position basse vers la position haute, le long de rails de coulissement.

Un tel dispositif de dosage 10 peut s'adapter à la gamme d'épandeurs déjà existants, ce qui permet d'en conserver la modularité et la polyvalence. La **figure 3** illustre un schéma de principe d'un système de distribution de particules selon la **figure 1****,** dans lequel un module d'épandage de précision est fixé en aval du dispositif de dosage 10 dans le sens d'avancement de la machine agricole (flèche référencée 75).

Arrivées à l'extrémité du tapis roulant 21, les particules tombent dans des cônes de réception 72 (un pour chaque trappe 51, 52) qui forment un angle d'environ 40° avec la verticale, mais dont l'inclinaison peut également être réglable.

Les cônes de réception 72 se terminent chacun par une goulotte 73, qui dirige le produit à épandre sur des disques de projection 70 équipés de pales de projection 71. La position de chaque goulotte 73 par rapport au disque 70 est réglable au moyen d'un vérin 74, de façon à régler le point d'alimentation du disque en particules.

Le système de calcul embarqué dans le système de distribution de particules calcule conjointement la position du point de chute des particules sur le disque et le niveau d'ouverture de chacune des trappes 51, 52, de façon que la modification de la position du point d'alimentation et la modification de la position des trappes, et donc l'actionnement des vérins 61, 62 et 74 soient liées.

Lorsque l'on veut utiliser des modules d'épandage adaptés aux pulvérulents secs de type poudre et aux produits en vrac, le dispositif de dosage 10 devient optionnel et peut être retiré de l'arrière de l'épandeur afin de réinstaller la trappe de sortie verticale. On pourra alors y arrimer les modules d'épandage adaptés à ce type de produits, tels que des disques d'épandage ultra-résistants à gros débit ou une rampe à entraînement mécanique avec vis à simple spire.

Les modes de réalisation décrits en relation avec les **figures 1 à 4** présentent deux trappes inclinées 51, 52 associées respectivement aux disques d'épandage droit et gauche de la machine d'épandage. Il est bien sûr également possible de prévoir plus de deux trappes, par exemple deux ou trois trappes mobiles indépendantes associées à chacun des deux côtés de la machine pour accroître la modularité et la précision du dosage. L'utilisation de plusieurs trappes par côté permet également de jouer sur la largeur d'ouverture de l'orifice de sortie.

En fermant totalement l'une seulement des deux trappes 51, 52, il est possible de réaliser un épandage sur une demie largeur, ce qui est utile en bordure de champ. En jouant sur les niveaux de fermeture relatifs de chacune des deux trappes, il est également possible de réaliser une gestion de la largeur de la nappe d'épandage, pour permettre un épandage de précision, par exemple dans les pointes de champs. Il est également possible de prévoir deux trappes mobiles indépendantes associées chacune à un convoyeur indépendant.

## Revendications

1. Dispositif de dosage (10) pour système de distribution de particules pour machine agricole, ledit système comprenant un réservoir (30) présentant dans une partie inférieure au moins un convoyeur (20) apte à transporter lesdites particules du réservoir vers au moins un orifice de sortie (41) dudit réservoir,
ledit dispositif de dosage comprenant au moins une trappe (51, 52) mobile entre une position fermée dans laquelle elle est apte à obturer ledit orifice de sortie, et une position ouverte dans laquelle elle est apte à dégager ledit orifice de sortie, ladite au moins une trappe étant inclinée par rapport à la verticale, de façon que l'angle formé entre ladite au moins une trappe et un plan dudit convoyeur dans le sens trigonométrique, appelé angle d'inclinaison (α), soit un angle aigu,
**caractérisé en ce que,** en position fermée, une extrémité inférieure (53) de ladite au moins une trappe se situe sensiblement à la verticale d'un axe de rotation (241) d'un rouleau d'entraînement (24) dudit convoyeur,
**et en ce qu'**il comprend, entre ledit au moins un orifice de sortie et ladite au moins une trappe mobile, un obturateur (43), de façon à former, entre ledit au moins un convoyeur et ledit obturateur, un tunnel (42) d'acheminement desdites particules.

2. Dispositif de dosage selon la revendication 1, **caractérisé en ce que** ledit obturateur est mobile entre au moins une position dite haute et au moins une position dite basse.

3. Dispositif de dosage selon la revendication 2, **caractérisé en ce que** ledit obturateur comprend un volet mobile en rotation entre ladite position haute et la dite position basse.

4. Dispositif de dosage selon la revendication 2, **caractérisé en ce que** ledit obturateur est apte à coulisser de ladite au moins une position haute à ladite au moins une position basse.

5. Dispositif de dosage selon l'une quelconque des revendications 1 à 4, **caractérisé en ce que** ledit obturateur présente une portion inférieure sensiblement parallèle au plan dudit au moins un convoyeur.

6. Dispositif de dosage selon l'une quelconque des revendications 1 à 5, **caractérisé en ce que,** en position fermée, une extrémité inférieure (53) de ladite au moins une trappe se situe sensiblement à la verticale mais légèrement en amont, dans le sens d'avancement dudit au moins un convoyeur, dudit axe de rotation (241).

7. Dispositif de dosage selon la revendication 6, **caractérisé en ce que,** en position fermée, ladite extrémité inférieure (53) se situe entre 0 et 100 mm en amont dudit axe de rotation (241).

8. Dispositif de dosage selon l'une quelconque des revendications 1 à 7, **caractérisé en ce que** ledit angle d'inclinaison (α) est sensiblement égal à un angle de talus desdites particules à distribuer.

9. Dispositif de dosage selon l'une quelconque des revendications 1 à 8, **caractérisé en ce que,** ledit système de distribution de particules comprenant également un module d'épandage desdites particules comprenant au moins deux disques d'épandage (70), ledit dispositif de dosage comprend au moins deux trappes mobiles (51, 52) indépendantes respectivement disposées en regard de chacun desdits au moins deux disques d'épandage.

10. Dispositif de dosage selon la revendication 9, **caractérisé en ce qu'**il comprend des moyens de réglage d'une hauteur d'ouverture de chacune desdites trappes mobiles indépendantes tenant compte d'une position d'un point d'alimentation de chacun desdits disques d'épandage.

11. Dispositif de dosage selon l'une quelconque des revendications 1 à 10, **caractérisé en ce qu'**il comprend des moyens de fixation amovible audit système de distribution de particules.

12. Dispositif de dosage selon l'une quelconque des revendications 1 à 11, **caractérisé en ce qu'**il comprend également des moyens de réduction d'une largeur dudit au moins un orifice de sortie.

13. Système de distribution de particules pour machine agricole, comprenant un réservoir présentant dans sa partie inférieure au moins un convoyeur apte à transporter lesdites particules du réservoir vers au moins un orifice de sortie dudit réservoir,
**caractérisé en ce qu'**il comprend un dispositif de dosage selon l'une quelconque des revendications 1 à 12 et des moyens de fixation amovible dudit dispositif de dosage.

## Patentansprüche

1. Dosiervorrichtung (10) für ein Partikelverteilungssystem für eine landwirtschaftliche Maschine, wobei das System einen Behälter (30) umfasst, der in einem unteren Teil wenigstens einen Förderer (20) aufweist, der geeignet ist, die Partikel aus dem Behälter in Richtung wenigstens einer Austrittsöffnung (41) des Behälters zu transportieren,
wobei die Dosiervorrichtung wenigstens eine Klappe (51, 52) umfasst, die zwischen einer geschlossenen Position, in welcher sie geeignet ist, die Austrittsöffnung zu verschließen, und einer offenen Position, in welcher sie geeignet ist, die Austrittsöffnung freizugeben, beweglich ist, wobei die wenigstens eine Klappe bezüglich der Vertikalen so geneigt ist, dass der Winkel, der zwischen der wenigstens einen Klappe und einer Ebene des Förderers im trigonometrischen Sinne gebildet wird, Neigungswinkel (a) genannt, ein spitzer Winkel ist,
**dadurch gekennzeichnet, dass** sich in der geschlossenen Position ein unteres Ende (53) der wenigstens einen Klappe im Wesentlichen vertikal über einer Drehachse (241) einer Antriebsrolle (24) des Förderers befindet,
und dadurch, dass sie zwischen der wenigstens einen Austrittsöffnung und der wenigstens einen beweglichen Klappe ein Verschlussstück (43) umfasst, so dass zwischen dem wenigstens einen Förderer und dem Verschlussstück ein Tunnel (42) für die Zuführung der Partikel gebildet wird.

2. Dosiervorrichtung nach Anspruch 1, **dadurch gekennzeichnet, dass** das Verschlussstück zwischen wenigstens einer sogenannten oberen Position und wenigstens einer sogenannten unteren Position beweglich ist.

3. Dosiervorrichtung nach Anspruch 2, **dadurch gekennzeichnet, dass** das Verschlussstück eine Blende umfasst, die zwischen der oberen Position und der unteren Position drehbeweglich ist.

4. Dosiervorrichtung nach Anspruch 2, **dadurch gekennzeichnet, dass** das Verschlussstück geeignet ist, aus der wenigstens einen oberen Position in die wenigstens eine untere Position zu gleiten.

5. Dosiervorrichtung nach einem der Ansprüche 1 bis 4, **dadurch gekennzeichnet, dass** das Verschlussstück einen unteren Abschnitt aufweist, der im Wesentlichen parallel zur Ebene des wenigstens einen Förderers ist.

6. Dosiervorrichtung nach einem der Ansprüche 1 bis 5, **dadurch gekennzeichnet, dass** in der geschlossenen Position ein unteres Ende (53) der wenigstens einen Klappe sich im Wesentlichen vertikal über, jedoch, in der Bewegungsrichtung des wenigstens einen Förderers gesehen, ein wenig vor der Drehachse (241) befindet.

7. Dosiervorrichtung nach Anspruch 6, **dadurch gekennzeichnet, dass** sich in der geschlossenen Position das untere Ende (53) zwischen 0 und 100 mm vor der Drehachse (241) befindet.

8. Dosiervorrichtung nach einem der Ansprüche 1 bis 7, **dadurch gekennzeichnet, dass** der Neigungswinkel (a) im Wesentlichen gleich einem Böschungswinkel der zu verteilenden Partikel ist.

9. Dosiervorrichtung nach einem der Ansprüche 1 bis 8, **dadurch gekennzeichnet, dass** das Partikelverteilungssystem außerdem ein Modul zum Ausstreuen der Partikel umfasst, das wenigstens zwei Streuscheiben (70) umfasst, wobei die Dosiervorrichtung wenigstens zwei unabhängige bewegliche Klappen (51, 52) umfasst, die jeweils gegenüber einer der wenigstens zwei Streuscheiben angeordnet sind.

10. Dosiervorrichtung nach Anspruch 9, **dadurch gekennzeichnet, dass** sie Mittel zur Regelung einer Öffnungshöhe jeder der unabhängigen beweglichen Klappen unter Berücksichtigung einer Position eines Zuführungspunktes jeder der Streuscheiben umfasst.

11. Dosiervorrichtung nach einem der Ansprüche 1 bis 10, **dadurch gekennzeichnet, dass** sie Mittel zur lösbaren Befestigung an dem Partikelverteilungssystem umfasst.

12. Dosiervorrichtung nach einem der Ansprüche 1 bis 11, **dadurch gekennzeichnet, dass** sie Mittel zur Verringerung einer Breite der einen Austrittsöffnung umfasst.

13. Partikelverteilungssystem für eine landwirtschaftliche Maschine, welches einen Behälter umfasst, der in seinem unteren Teil wenigstens einen Förderer aufweist, der geeignet ist, die Partikel aus dem Behälter in Richtung wenigstens einer Austrittsöffnung des Behälters zu transportieren,
**dadurch gekennzeichnet, dass** es eine Dosiervorrichtung nach einem der Ansprüche 1 bis 12 und Mittel zur lösbaren Befestigung der Dosiervorrichtung umfasst.

## Claims

1. Dosing device (10) for a particle distribution system for agricultural machines, said system comprising a hopper (30) having, in a lower part, at least one conveyor (20) capable of transporting said particles from the hopper towards at least one outlet hole (41) of said hopper,
Said dosing device comprising at least one hatch (51, 52) that is moveable between a closed position in which it is capable of shutting off the outlet hole and an open position in which it is capable of clearing the outlet hole,
said at least one hatch being inclined relative to the vertical so that the angle formed between said hatch or hatches and a plane of said conveyor, in the trigonometric sense, called an angle of inclination (a), is an acute angle ,
**characterized in that**, in a closed position, a lower extremity (53) of said at least one hatch is situated substantially vertically to an axis of rotation (241) of a driving roller (24) of the conveyor,
and **in that** it comprises, between said at least one outlet hole and said at least one mobile hatch or hatches, a shutter (43) so as to form, between said at least one conveyor and said shutter, a tunnel (42) for conveying the particles.

2. Dosing device according to claim 1, **characterized in that** said shutter is mobile between at least one position called a high position and at least one position called a low position.

3. Dosing device according to claim 2, **characterized in that** said shutter comprises a flap that is mobile in rotation between said high position and said low position.

4. Dosing device according to claim 2, **characterized in that** said shutter is capable of sliding from said at least one high position to said at least one low position.

5. Dosing device according to any one of the claims 1 to 4, **characterized in that** said shutter has a lower portion substantially parallel to the plane of the conveyor.

6. Dosing device according to any one of the claims 1 to 5, **characterized in that**, in closed position, a lower extremity (53) of said at least one hatch is situated substantially at the vertical to said axis of rotation, but slightly upstream, in the direction of forward movement of the conveyor (241).

7. Dosing device according to claim 6, **characterized in that**, in closed position, said lower extremity (53) is situated between 0 and 100 mm upstream to said axis of rotation (241).

8. Dosing device according to any one of the claims 1 to 7, **characterized in that** said angle of inclination (a) is substantially equal to an angle of slope of said particles to be distributed.

9. Dosing device according to any one of the claims 1 to 8, **characterized in that**, with said particle distribution system also comprising a particle spreader module comprising at least two spreader discs (70), said dosing device comprises at least two independent mobile hatches (51, 52) respectively positioned so as to be facing each of said at least two spreader discs.

10. Dosing device according to claim 9, **characterized in that** it comprises means for adjusting the height of the opening of each of said independent mobile hatches, in taking account of a position of a feeder point of each of said spreader discs.

11. Dosing device according to any one of the claims 1 to 10, **characterized in that** it comprises means for detachable fastening to said particle distribution system.

12. Dosing device according to any one of the claims 1 to 11, **characterized in that** it also comprises means for reducing a width of said at least one outlet hole.

13. Particle distribution system for agricultural machines comprising a hopper having in its lower part at least one conveyor capable of transporting said particles from the hopper to at least one outlet hole of said hopper,
**characterized in that** it comprises a dosing device according to any one of the claims 1 to 12 and means for detachably fastening said dosing device.
